# EUROPEAN PATENT SPECIFICATION

(11) **EP 3 142 047 B1**
(45) Date of publication and mention of the grant of the patent: **21.08.2019**
(21) Application number: 14892540.7
(22) Date of filing: 20.11.2014
(51) Int. Cl.: G06K 17/00, G06K 19/07, G06K 7/00, G06K 7/10

(54) **PASSIVE RADIO FREQUENCY IDENTIFICATION TAG, RADIO FREQUENCY READ/WRITE HEAD AND RADIO FREQUENCY IDENTIFICATION SYSTEM**
PASSIVES RFID-ETIKETT, RADIOFREQUENZ-LESE-/SCHREIBKOPF UND RFID-SYSTEM
ÉTIQUETTE D'IDENTIFICATION PAR RADIOFRÉQUENCE PASSIVE, TÊTE DE LECTURE/ÉCRITURE RADIOFRÉQUENCE ET SYSTÈME D'IDENTIFICATION PAR RADIOFRÉQUENCE

(30) Priority: 23.05.2014 CN 201410223544
(43) Date of publication of application: 15.03.2017
(73) Proprietor: ZTE Corporation, Shenzhen, Guangdong 518057 (CN)
(72) Inventor: XU, Jidong, Shenzhen Guangdong 518057 (CN); LU, Jianxin, Shenzhen Guangdong 518057 (CN); FU, Zhiming, Shenzhen Guangdong 518057 (CN)
(74) Representative: Regimbeau
(86) International application number: PCT/CN2014/091810
(87) International publication number: WO 2015/176514

(56) References cited:
- WO-A2-01/95242
- CN-A- 101 533 460
- CN-A- 101 743 697
- GB-A- 2 410 151
- US-A1- 2011 006 885
- US-A1- 2013 257 596

## Description

### TECHNICAL FIELD

The present disclosure relates to the field of communications, and in particular relates to a passive radio frequency identification (RFID) tag, a radio frequency (RF) read/write head and an RFID system.

### BACKGROUND

With maturity and development of optical fiber communication technologies and constant promotion of a modern information society for network demands, an optical fiber network has replaced a copper wire communication network, and the optical fiber network nearly covers all communication networks from a core network and a bearer network to an access network and then a fiber to the home (FTTH). A large number of optical fibers and connection points exist in the overall optical fiber network, so how to distinguish these optical fibers and connection conditions of the optical fibers becomes time-consuming and energy-wasting for operators. Therefore, in order to improve working efficiency and reduce working intensity, an intelligent tag is added to each optical connection point, then a read/write head automatically reads the tag, and relevant data are reported to a network manager, so that detection automation of the optical fiber connection points gradually becomes a consensus, thereby realizing a visible and manageable optical fiber network.

In an intelligent optical distribution network (ODN), a tag and a read/write head are added to each optical connection head, so as to enable the intelligent ODN to automatically report a connection state of the intelligent ODN, i.e., intelligentization. China Communications Standards Association (CCSA) has formulated a series of corresponding standards for the intelligent ODN, and a corresponding industrial chain begins to form.

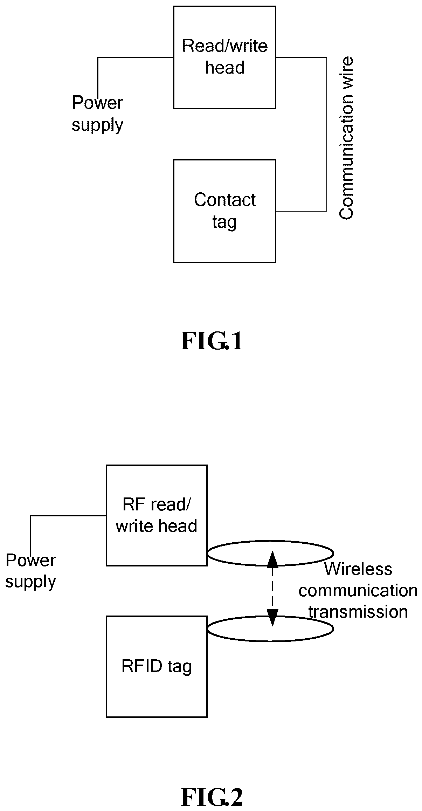

Currently, two tag technologies are mainly adopted in the intelligent ODN. One of the technologies is a contact-type tag technology, which typically includes 1-Wire interface or an Electrically Erasable Programmable Read-only Memory (EEPROM) interface. As shown in Fig. 1, a tag needs to be powered. The contact-type tag technology proposes higher requirements for structural design and reliability of the tag. Meanwhile, the contact-type tag technology is not flexible enough due to physical connection in some rebuilding scenes. The other of the technologies is a non-contact-type tag technology, which typically includes an RFID technology. As shown in Fig. 2, due to working principle of the RFID technology, namely, magnetic lines are cut to generate induction current, a coil of the RFID technology is required to have a certain working area so as to generate enough induction current for driving a chip to work normally. Next, a working coil of the read/write head is also required to have a certain working area, causing that adjacent RFIDs are also induced and causing mutual interference. Therefore, this technology is unsuitable for a working environment with optical nodes of dense optical fiber connection heads.

In view of this, a read/write technology is required so that a tag can not only maintain non-contact-type read/write, but also meet other tags required by optical nodes of dense optical fiber connection heads. Relevant technologies are also known from document WO 01/95242 A2 which relates to a remote communication system and method, and from document GB 2410151 A which relates to a radio frequency identification tag with means sensitive to light for controlling communication between rfid tag and reader.

### SUMMARY

Embodiments of the present invention provide a passive RFID tag, an RF read/write head and an RFID system, so as to at least solve the problem that a contact-type tag technology and RFID tags can not meet the requirements for dense scenes in relevant technologies.

The above problem is solved by a radio frequency RF read/write head according to claim 1, a RF tag identification system according to claim 4, and a method of performing a read/write operation according to claim 7. Claims 2 and 3 concern embodiments of the radio frequency RF read/write head. Claims 5 and 6 concern embodiments of the RF tag identification system. Claims 8-12 concern embodiments of the method of performing a read/write operation.

Through embodiments of the present invention, non-contact-type RFID is realized, and mutual interference of the RFID tags in dense scenes is reduced or avoided.

### BRIEF DESCRIPTION OF DRAWINGS

Drawings described here are used for providing further understanding for the present disclosure and form a part of the present application. Exemplary embodiments of the present invention and the description for the exemplary embodiments are used for explaining the present disclosure, rather than limiting the present disclosure. In the drawings:
Fig. 1 is a schematic diagram illustrating a contact-type tag technology according to a relevant technology;
Fig. 2 is a schematic diagram illustrating an RFID technology according to a relevant technology;
Fig. 3 is a structural block diagram illustrating an RF read/write head according to embodiments of the present invention;
Fig. 4 is a structural block diagram illustrating a passive RFID tag according to embodiments of the present invention;
Fig. 5 is a schematic diagram illustrating an RF tag identification system according to embodiments of the present invention;
Fig. 6 is a schematic diagram illustrating optical fiber connection heads and an optical fiber wiring apparatus according to embodiments of the present invention;
Fig. 7 is a flow chart illustrating a read/write method of an RFID tag system according to embodiments of the present invention;
Fig. 8 is a structural block diagram illustrating a read/write apparatus of an RFID tag system according to embodiments of the present invention; and
Fig. 9 is a schematic diagram illustrating an RFID system according to embodiments of the present invention.

### DETAILED DESCRIPTION

The present disclosure is described below in detail with reference to drawings and in combination with embodiments. It should be noted that embodiments in the present application can be combined with the features in embodiments under the condition of no conflict.

The following embodiments provide a non-contact-type tag solution, where RFID tags are charged by a technology of an OEC, and an RFID tag with the OEC is called as an optical RFID tag for short and also called as a passive RFID tag.

### Embodiment I

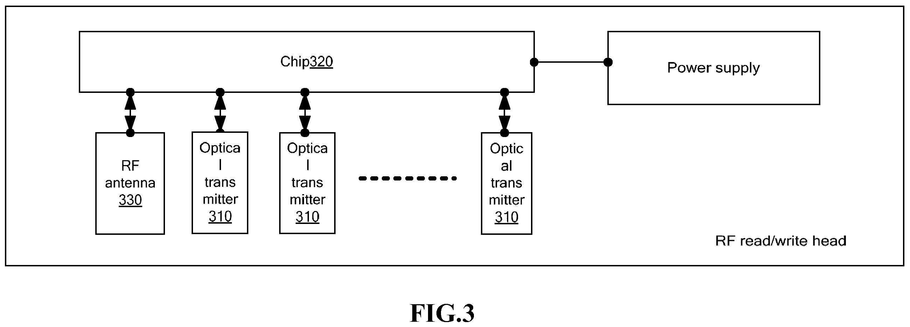

Fig. 3 is a structural block diagram illustrating an RF read/write head according to embodiments of the present invention. As shown in Fig. 3, the RF read/write head of embodiments of the present invention includes: a plurality of optical transmitters 310, a chip 320 and an RF antenna 330, where the RF antenna 330 is connected with the chip 320; the plurality of optical transmitters 310 are connected with the chip 320; and the chip 320 is configured to control an optical transmitter 310 corresponding to a designated RFID tag in the plurality of optical transmitters 310 to emit light so as to start the designated RFID tag when a read/write operation is carried out on the designated RFID tag in a plurality of RFID tags, and is also configured to carry out a read/write operation on the designated RFID tag.

In one implementation manner of embodiments of the present invention, the RF read/write head may include only one RF antenna 330. Through the implementation manner, it is unnecessary to set one RF antenna for each RFID tag, so that cost is reduced.

Of course, in embodiments of the present invention, a plurality of RF antennas 330 may be arranged; and, in order to avoid mutual interference, a certain distance may be kept among the plurality of RF antennas 330.

In one implementation manner of embodiments of the present invention, the optical transmitters 310 may be LEDs, but not limited thereto.

### Embodiment II

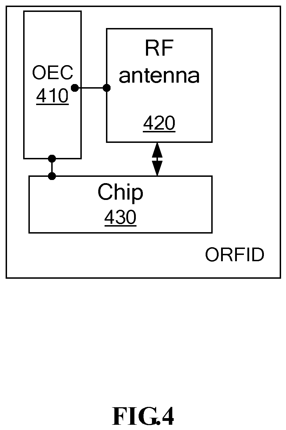

Fig. 4 is a structural block diagram illustrating a passive RFID tag according to embodiments of the present invention. As shown in Fig. 4, the passive RFID tag of embodiments of the present invention mainly includes: an OEC 410, an RF antenna 420 and a chip 430, where the OEC 410 is connected with the chip 430 and the RF antenna 420 and is configured to convert optical energy transmitted by an RF read/write head into electrical energy and supply power to the chip 430 and the RF antenna 420; the RF antenna 420 is connected with the chip 430; and the chip 430 is configured to store tag information and respond to a read/write operation of the RF read/write head.

### Embodiment III

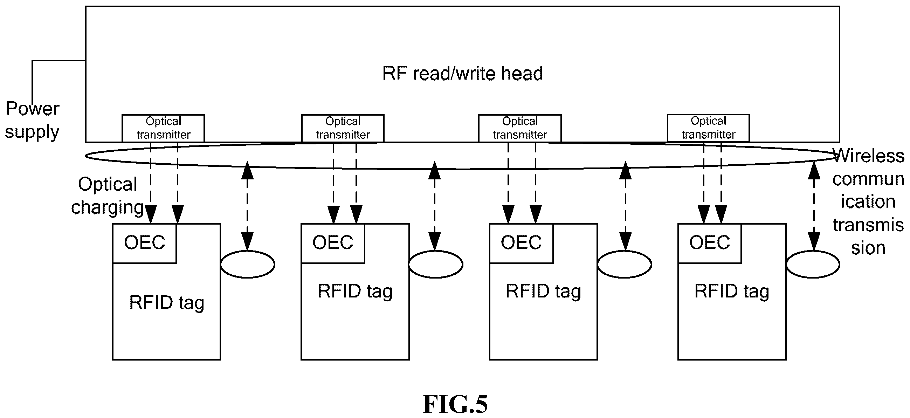

Fig. 5 is a schematic diagram illustrating an RF tag identification system according to embodiments of the present invention. As shown in Fig. 5, the system includes: a plurality of passive RFID tags 1 and an RF read/write head 2, where
with reference to Fig. 4, each passive RFID tag 1 includes: an OEC, an RF antenna and a chip, where the OEC is connected with the chip and the RF antenna and is configured to convert optical energy transmitted by the RF read/write head into electrical energy and supply power to the chip and the RF antenna; and the chip is configured to store tag information and respond to a read/write operation of the RF read/write head 2; and
with reference to Fig. 3, the RF read/write head includes: a plurality of optical transmitters, a chip and an RF antenna, where the RF antenna is connected with the chip; the plurality of optical transmitters are connected with the chip; and the chip is configured to control an optical transmitter corresponding to a designated RFID tag in the plurality of optical transmitters to emit light so as to start the designated RFID tag when a read/write operation is carried out on the designated RFID tag in the plurality of RFID tags; and is also configured to carry out the read/write operation on the designated RFID tag.

In one implementation manner of embodiments of the present invention, the RF read/write head 2 may include only one RF antenna.

In one implementation manner of embodiments of the present invention, the optical transmitter may be an LED, but not limited thereto.

The passive RFID tags 1 and the RF read/write head 2 are as described with reference to embodiment I and embodiment II and are not repeated here.

### Embodiment IV

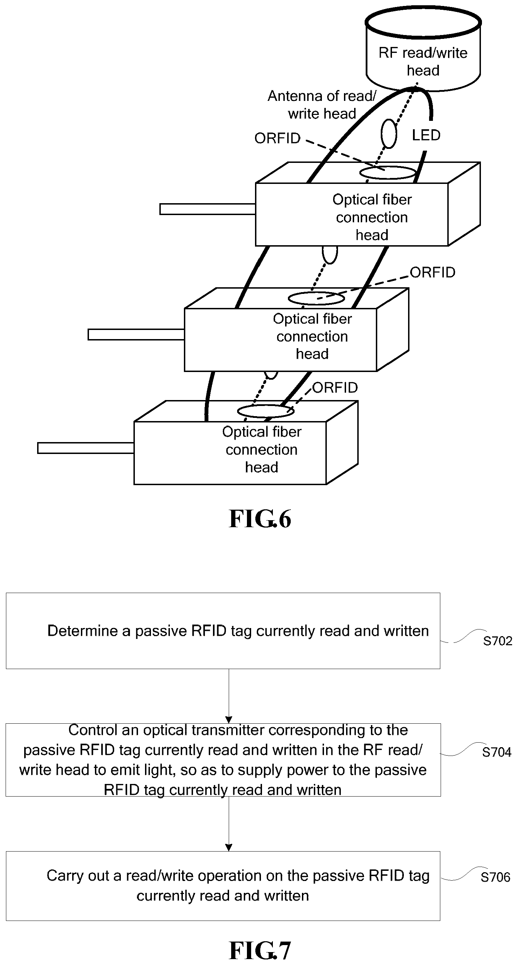

Fig. 6 is a schematic diagram illustrating optical fiber connection heads and an optical fiber wiring apparatus according to embodiments of the present invention. As shown in Fig. 6, each optical fiber connection head is provided with a passive RFID tag of embodiment II. The optical fiber wiring apparatus is provided with an RF read/write head of embodiment I, where the wiring apparatus includes a plurality of connection ports, each of which is configured to be connected with the optical fiber connection head in a pluggable manner; and a plurality of optical transmitters of the RFID head are arranged at positions that the optical fiber connection heads are respectively in alignment to the corresponding passive RFID tags on the optical fiber connection heads when the plurality of optical fiber connection heads are inserted into the plurality of connection ports.

### Embodiment V

Fig. 7 is a flow chart illustrating a read/write method of an RFID tag system according to embodiments of the present invention. The RFID tag system includes an RF read/write head of embodiment I and a plurality of passive RFID tags of embodiment II. As shown in Fig. 7, the method includes step S702 to step S706.

In step S702, a passive RFID tag currently read and written is determined.

In step S704, an optical transmitter corresponding to the passive RFID tag currently read and written in the RF read/write head is controlled to emit light, so as to supply power to the passive RFID tag currently read and written.

In step S706, a read/write operation is carried out on the passive RFID tag currently read and written.

In one implementation manner of embodiments of the present invention, the above step S706 may include: sending an inquiry instruction to the passive RFID tag currently read and written, where the inquiry instruction is configured to inquire a state of the passive RFID tag currently read and written; and receiving a first state sent by the passive RFID tag currently read and written. The above state may be tag information and the like. The tag information may include identity information and position information.

In one implementation manner of embodiments of the present invention, the method may further include: judging the above first state; and distributing tag information to the passive RFID tag currently read and written when the first state indicates that the passive RFID tag currently read and written is blank.

In one implementation manner of embodiments of the present invention, the method may further include: judging the above first state; and requesting the passive RFID tag currently read and written to report its tag information when the first state indicates that the passive RFID tag currently read and written has tag information.

In one implementation manner of embodiments of the present invention, the method may further include: receiving tag information reported by the passive RFID tag currently read and written; judging whether the received tag information meets a preset condition; and distributing new tag information to the passive RFID tag currently read and written when the received tag information does not meet the preset condition.

In one implementation manner of embodiments of the present invention, after carrying out the read/write operation on the passive RFID tag currently read and written, the method may further include: closing the optical transmitter corresponding to the passive RFID tag currently read and written in the RF read/write head; and carrying out read/write operations on other passive RFID tags in the plurality of passive RFID tags.

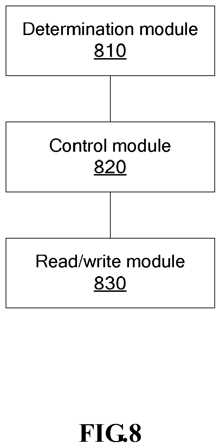

Fig. 8 is a structural block diagram illustrating a read/write apparatus of an RFID tag system according to embodiments of the present invention. The apparatus includes: a determination module 810, configured to determine a passive RFID tag currently read and written; a control module 820, configured to control an optical transmitter corresponding to the passive RFID tag currently read and written in the RF read/write head to emit light so as to supply power to the passive RFID tag currently read and written; and a read/write module 830, configured to carry out a read/write operation on the passive RFID tag currently read and written.

Implementation manners of embodiments of the present invention are described below.

### Implementation manner I

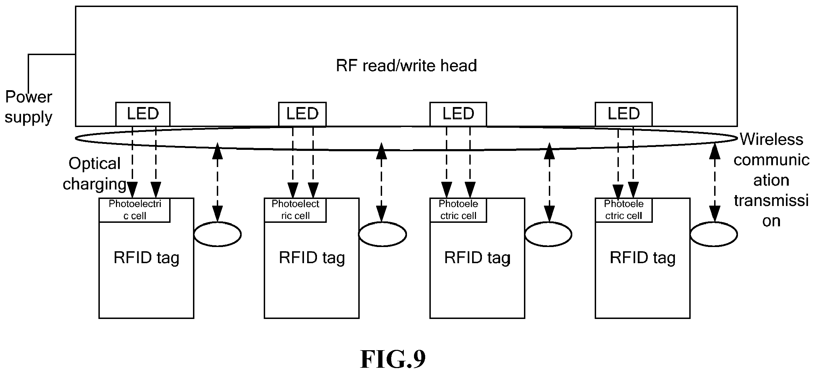

Fig. 9 is a schematic diagram illustrating an RFID system according to embodiments of the present invention. As shown in Fig. 9, the system includes: an RF read/write head and a plurality of passive RFID tags.

The RF read/write head is composed of a plurality of optical transmitters, an RF antenna and a control chip. With reference to a basic architecture diagram in Fig. 3, the RF read/write head is an active device, may transmit light through the optical transmitters to charge the passive RFID tags and may also transmit RF signals to the passive RFID tags so as to transmit instructions; the RF antenna of the RF read/write head may also be configured to receive data signals transmitted back from the passive RFID tags, and the control chip processes the data signals. In order to avoid the situation that the plurality of passive RFID tags simultaneously transmit information which causing confusion when the RF read/write head receives the information, a sequence that the tags receive and transmit the information is controlled by controlling transmission states of the optical transmitters (which are LEDs in the implementation manner), namely, if information of a certain designated tag needs to be read and written, a corresponding optical transmitter above the corresponding tag is started so as to charge the tag; and, the optical transmitter is closed after the read/write operation is completed, while other tags are in a no power state as other optical transmitters are closed. Therefore, the other tags cannot receive or transmit signals.

All the passive RFID tags share one RF antenna of the RF read/write head, while a control part and a processing part (including the chip) of the RF read/write head are arranged at idle positions beside the RF antenna. One advantage of doing this is that there is no need to arrange a complete read/write head on each tag, thereby reducing cost and reducing technical difficulty in reducing volume of the RF read/write head; and a corresponding LED may be arranged in a space above the narrow tag, and the tags share one RF antenna, thereby reducing cost and installation difficulty.

The passive RFID tag includes an OEC, an RF antenna and a chip. With reference to a basic architecture diagram in Fig. 4, firstly, the OEC converts received optical energy into electrical energy and transmits the electrical energy to the RF antenna and the chip, the RF antenna transmits a received signal to the chip, and the RF antenna is started as required to transmit a reply signal to the RF read/write head after the chip processes data.

As the passive RFID tags are passive, firstly, the RF read/write head emits light to charge the passive RFID tags; then the RF read/write head sends corresponding instructions to the passive RFID tags; the passive RFID tags transmit corresponding replies by own RF antenna after receiving the instructions; and the read/write head processes the replies after receiving them. The read/write head informs the passive RFID tags of having received and ending if information is sufficient; and if the information is insufficient, the read/write head further sends inquiry instructions, and the passive RFID tags further send replies as required, and the process would not stop until the read/write head is satisfied. The read/write head is in non-contact with the passive RFID tags, but a distance between the read/write head and the passive RFID tags is very short and is generally limited to be very short. The distance may be limited to be within 1 cm in an application in an intelligent ODN, and data transmission between the read/write head and the passive RFID tags is realized through a video wireless communication point-to-point (P2P) technology.

### Implementation manner II

As shown in Fig. 9, read/write for tag information is initiated by a chip in an RF read/write head. Passive RFID tags mainly store identity information and position information. These information are assigned by the RF read/write head and may also be modified by the RF read/write head. A working power supply of the passive RFID tags comes from their OECs by optical conversion, the passive RFID tags are charged by the RF read/write head, and the RF read/write head can control a starting or closing state of optical transmitters above the passive RFID tags so as to determine corresponding tags to read information.

With reference to a structure of the RF read/write head in Fig. 3, the RF read/write head is an active device and includes a plurality of optical transmitters, an RF antenna and a chip, where the optical transmitters are generally LEDs and have an effect of charging the passive RFID tags. The RF antenna has an effect of transmitting instructions to the passive RFID tags, and receiving signals sent by the passive RFID tags. The chip may receive an instruction of an external network manager, start read/write for the passive RFID tags, assign identity information and position information to blank passive RFID tags, read and compare passive RFID tags already have identity information, and modify corresponding information for the passive RFID tags. The control chip may start information transmission and reading for a certain passive RFID tag according to a starting or closing state of the LED, and finally, the read/write head transmits relevant information to the network manager or a control center for storing.

With reference to a structure of the passive RFID tag in Fig. 4, the passive RFID tag is passive and includes an OEC, an RF antenna and a chip, where the OEC receives light of the RF read/write head and converts the light into a power supply to be used by the RF antenna and the chip; the RF antenna converts the received instruction of the RF read/write head into an electrical signal and transmits the electrical signal to the chip; and the chip can process the instruction and start the RF antenna to reply; the RF antenna sends a reply signal according to requirements of the chip, and meanwhile, the chip has a function of information storing.

### Embodiment III

With reference to Fig. 6, passive RFID tags are arranged on optical fiber connection heads. Corresponding LED optical transmitters are arranged above the tags, while a control part and a processing part (including a chip and the like) of an RF read/write head are arranged at idle positions of a device, and all the tags share one RF antenna of the RF read/write head. It indicates that an optical fiber is already in a connection state when the optical fiber connection heads are inserted into a connecting box, and at this moment, the tags are just below the optical transmitters of the RF read/write head.

When the tag is read and written, a specific working process is described below.

Firstly, the read/write head receives an instruction of a network manager or a control center and carries out read/write on the tag, and the chip starts a read/write process, in which firstly the read/write head opens the LED corresponding to the passive RFID tag to charge the passive RFID tag, and then following test steps are started to be executed.

In step 1, an inquiry instruction, such as a state of the tag, is transmitted to the passive RFID tag.

In step 2, the passive RFID tag replies a current state, such as a blank state or a state of having identity information.

In step 3, the read/write head distributes one piece of identity information to the passive RFID tag if the tag has blank identity information; and the read/write head requires the passive RFID tag to report identity information if the passive RFID tag has right identity information.

In step 4, the passive RFID tag reports own current identity information after completing the execution.

In step 5, the read/write head verifies the identity information, and re-assigns new identity information to the passive RFID tag if the identity information does not meet requirements; the passive RFID tag repeats step 4; the read/write head re-assesses the information, and steps 3, 4 and 5 are repeated if the read/write head is not satisfied; and
the read/write head sends an instruction of ending if information fed back meets requirements.

In step 6, the passive RFID tag replies ending and confirmation after receiving the ending instruction.

In step 7, the read/write head closes the LED after receiving the reply; and
in step 8, the read/write head opens an LED corresponding to another passive RFID tag, and steps 1-7 are repeated.

From the above descriptions, it can be seen that the present disclosure achieves following technical effects.

Compared to a pure RFID, firstly, the RF antenna of the passive RFID tag does not need to consider the problem of power supply. Therefore, the function of the antenna recovers to the RF transmitting and receiving instincts; the antenna can be designed to be smaller, thereby greatly reducing the size and the volume of the tag; the size of the corresponding RF read/write head may also not need to be considered; only one LED optical transmitter needs to be arranged above the tag; meanwhile, the RF antenna and other parts are used in common, thereby greatly reducing the cost and overcoming the problem of limiting an application of the pure RFID as the pure RFID cannot be made to be small; and the passive RFID tag can solve the problem of identification of the dense optical connection heads. Secondly, as the tag is charged by the light, the read/write head can emit light to charge the tag only when the read/write head carries out read/write. In this way, the problem of supplying power by mistake to the adjacent tags does not exist, while the adjacent tags do not have enough power to support signal reception and transmission due to no irradiation of the light, therefore, the possibility of misjudgment of the read/write head as adjacent pure RFID tags compete to send signals is also avoided.

Apparently, those skilled in the art should understand that all the above modules or steps of the present disclosure may be realized by a universal calculating apparatus and may be centralized on a single calculating apparatus or may be distributed on a network formed by a plurality of calculating apparatus. Alternatively, all the above modules or steps of the present disclosure may be realized by an executable program code of the calculating apparatus, so that all the above modules or steps of the present disclosure may be stored in a storing apparatus and then executed by the calculating apparatus. Moreover, under some conditions, the shown or described steps may be executed according to a sequence different from the sequence here, or steps are respectively made into a plurality of integrated circuit modules, or a plurality of modules or steps in all the above modules or steps are made into a single integrated circuit module to realize. In this way, the present disclosure is not limited to a combination of any specific hardware and software.

The above descriptions are only embodiments of the present invention, rather than a limit to the present disclosure. Those skilled in the art should understand that the present disclosure may have a variety of modifications and changes.

### Industrial Applicability

As mentioned above, the passive RFID tag, the RF read/write head and the RFID system provided by embodiments of the present invention have following beneficial effects: firstly, the RF antenna of the passive RFID tag does not need to consider the problem of power supply, and the antenna can be designed to be smaller, thereby greatly reducing the size and the volume of the tag; the size of the corresponding RF read/write head may also not need to be considered; only one LED optical transmitter needs to be arranged above the tag; and meanwhile, the RF antenna and other parts are shared, thereby greatly reducing the cost. However, the passive RFID tag can solve the problem of identification of the dense optical connection heads. Secondly, as the tag is charged by the light, the read/write head can emit light to charge the tag only when the read/write head carries out read/write. In this way, the problem of supplying power by mistake to the adjacent tags does not exist, while the adjacent tags do not have enough power to support signal reception and transmission due to no irradiation of the light, therefore, the possibility of misjudgment of the read/write head as adjacent pure RFID tags compete to send signals is also avoided.

## Claims

1. A radio frequency RF read/write head, comprising: a plurality of optical transmitters (310), a chip (320) and a RF antenna (330), wherein
the RF antenna (330) is connected with the chip (320);
the plurality of optical transmitters (310) are connected with the chip (320); and
the chip (320) is configured i) to control an optical transmitter (310) corresponding to a designated radio frequency identification RFID tag in the plurality of optical transmitters (310) to emit light so as to supply power to the designated RFID tag when a read/write operation is carried out on the designated RFID tag in a plurality of RFID tags, and ii) to control the RF antenna to carry out the read/write operation on the designated RFID tag.

2. The RF read/write head according to claim 1, wherein the RF read/write head comprises one RF antenna (330).

3. The RF read/write head according to claim 1, wherein each of the optical transmitters (310) is a light emitting diode LED.

4. A RF tag identification system, comprising: a plurality of passive RFID tags and a RF read/write head, wherein
each of the passive RFID tags comprises: an optical to electrical converter, OEC, (410), a first RF antenna (420) and a first chip (430), wherein the OEC (410) is connected with the first chip and the first RF antenna, and the OEC is configured to convert optical energy transmitted from the RF read/write head into electrical energy and supply power to the first chip and the first RF antenna; and the first chip is configured to store tag information and respond to a read/write operation of the RF read/write head;
the RF read/write head comprises: a plurality of optical transmitters (310), a second chip (320) and a second RF antenna (330), antenna, wherein the second RF antenna is connected with the second chip; the plurality of optical transmitters (310) are connected with the second chip; and the second chip is configured i) to control an optical transmitter (310) corresponding to a designated RFID tag in the plurality of optical transmitters (310) to emit light so as to supply power to the designated RFID tag when a read/write operation is carried out on the designated RFID tag in the plurality of RFID tags, and ii) to control the second RF antenna to carry out the read/write operation on the designated RFID tag.

5. The RF tag identification system according to claim 4, wherein the RF read/write head (2) comprises one second RF antenna.

6. The RF tag identification system according to claim 4, wherein each of the optical transmitters (310) is a LED.

7. A method of performing a read/write operation using the RF tag identification system according to claim 4, the method comprising:
determining (S702) the passive RFID tag to be read and written;
controlling (S704) the optical transmitter corresponding to the passive RFID tag to be read and written in the RF read/write head to emit light, so as to supply power to the passive RFID tag to be read and written; and
carrying out (S706) a read/write operation on the passive RFID tag to be read and written.

8. The method according to claim 7, wherein the carrying out the read/write operation on the passive RFID tag to be read and written, comprises:
sending an inquiry instruction to the passive RFID tag to be read and written, wherein the inquiry instruction is configured to inquire a state of the passive RFID tag to be read and written; and
receiving a first state sent by the passive RFID tag to be read and written.

9. The method according to claim 8, further comprising:
judging the first state; and
distributing tag information to the passive RFID tag to be read and written when the first state indicates that the passive RFID tag to be read and written is blank.

10. The method according to claim 8 or 9, further comprising:
judging the first state; and
requesting the passive RFID tag to be read and written to report its tag information when the first state indicates that the passive RFID tag to be read and written has tag information.

11. The method according to claim 10, further comprising:
receiving tag information reported by the passive RFID tag to be read and written;
judging whether the received tag information meets a preset condition; and
distributing new tag information to the passive RFID tag to be read and written when the received tag information does not meet the preset condition.

12. The method according to claim 7, after carrying out the read/write operation on the passive RFID tag to be read and written, further comprising:
closing an optical transmitter corresponding to the passive RFID tag currently read and written in the RF read/write head; and
carrying out read/write operations on other passive RFID tags in the plurality of passive RFID tags.

## Patentansprüche

1. Radiofrequenz-RF-Lese/Schreibkopf, der Folgendes umfasst: mehrere optische Sender (310), einen Chip (320) und eine RF-Antenne (330), wobei
die RF-Antenne (330) mit dem Chip (320) verbunden ist;
die mehreren optischen Sender (310) mit dem Chip (320) verbunden sind; und
der Chip (320) ausgestaltet ist, um i) einen optischen Sender (310), der einem bezeichneten Radiofrequenzidentifikations-RFID-Etikett in den mehreren optischen Sendern (310) entspricht, zu steuern, um Licht zu emittieren, um das bezeichnete RFID-Etikett mit Leistung zu versorgen, wenn eine Lese/Schreib-Operation auf dem bezeichneten RFID-Etikett in mehreren RFID-Etiketten durchgeführt wird, und ii) die RF-Antenne zu steuern, um die Lese/Schreib-Operation auf dem bezeichneten RFID-Etikett durchzuführen.

2. RF-Lese/Schreibkopf nach Anspruch 1, wobei der RF-Lese/Schreibkopf eine RF-Antenne (330) umfasst.

3. RF-Lese/Schreibkopf nach Anspruch 1, wobei jeder von den optischen Sendern (310) eine lichtemittierende Diode LED ist.

4. RF-Etikett-Identifikationssystem, das Folgendes umfasst: mehrere passive RFID-Etiketten und einen RF-Lese/Schreibkopf, wobei
jedes von den passiven RFID-Etiketten Folgendes umfasst: einen optisch-elektrischen Wandler OEC (410), eine erste RF-Antenne (420) und einen ersten Chip (430), wobei der OEC (410) mit dem ersten Chip und der ersten RF-Antenne verbunden ist und der OEC ausgestaltet ist, optische Energie, die von dem RF-Lese/Schreibkopf übertragen wird, in elektrische Energie umzuwandeln und den ersten Chip und die erste RF-Antenne mit Leistung zu versorgen; und der erste Chip ausgestaltet ist, um Etikettinformationen zu speichern und auf eine Lese/Schreib-Operation des RF-Lese/Schreibkopfs zu reagieren;
der RF-Lese/Schreibkopf Folgendes umfasst: mehrere optische Sender (310), einen zweiten Chip (320) und eine zweite RF-Antenne (330), wobei die zweite RF-Antenne mit dem zweiten Chip verbunden ist; die mehreren optischen Sender (310) mit dem zweiten Chip verbunden sind; und der zweite Chip ausgestaltet ist, i) einen optischen Sender (310), der einem bezeichneten RFID-Etikett in den mehreren optischen Sendern (310) entspricht, zu steuern, um Licht zu emittieren, um das bezeichnete RFID-Etikett mit Leistung zu versorgen, wenn eine Lese/Schreib-Operation auf dem bezeichneten RFID-Etikett in den mehreren RFID-Etiketten durchgeführt wird, und ii) die zweite RF-Antenne zu steuern, um die Lese/Schreib-Operation auf dem bezeichneten RFID-Etikett durchzuführen.

5. RF-Etikett-Identifikationssystem nach Anspruch 4, wobei der RF-Lese/Schreibkopf (2) eine zweite RF-Antenne umfasst.

6. RF-Etikett-Identifikationssystem nach Anspruch 4, wobei jeder von den optischen Sendern (310) eine LED ist.

7. Verfahren zur Durchführung einer Lese/Schreiboperation unter Verwendung des RF-Etikett-Identifikationssystems nach Anspruch 4, wobei das Verfahren Folgendes umfasst:
Bestimmen (S702) des passiven RFID-Etiketts, das zu lesen und zu beschreiben ist;
Steuern (S704) des optischen Senders, der dem passiven RFID-Etikett entspricht, das zu gelesen und zu beschrieben ist, in dem RF-Lese/Schreibkopf, um Licht zu emittieren, um das passive RFID-Etikett, das zu lesen und zu beschreiben ist, mit Leistung zu versorgen; und
Durchführen (S706) einer Lese/Schreib-Operation auf dem passiven RFID-Etikett, das zu lesen und zu beschreiben ist.

8. Verfahren nach Anspruch 7, wobei das Durchführen der Lese/Schreib-Operation auf dem passiven RFID-Etikett, das zu lesen und zu beschreiben ist, Folgendes umfasst:
Senden eines Abfragebefehls an das passive RFID-Etikett, das zu lesen und zu beschreiben ist, wobei der Abfragebefehl ausgestaltet ist, um einen Zustand des passiven RFID-Etiketts, das zu lesen und zu beschreiben ist, abzufragen; und
Empfangen eines ersten Zustands, der durch das passive RFID-Etikett gesendet wird, das zu lesen und zu beschreiben ist.

9. Verfahren nach Anspruch 8, das ferner Folgendes umfasst:
Beurteilen des ersten Zustands; und
Verteilen von Etikettinformationen an das passive RFID-Etikett, das zu lesen und zu beschreiben ist, wenn der erste Zustand angibt, dass das passive RFID-Etikett, das zu lesen und zu beschreiben ist, leer ist.

10. Verfahren nach Anspruch 8 oder 9, das ferner Folgendes umfasst:
Beurteilen des ersten Zustands; und
Auffordern des passiven RFID-Etiketts, das zu lesen und zu beschreiben ist, seine Etikettinformationen zu melden, wenn der erste Zustand angibt, dass das passive RFID-Etikett, das zu lesen und zu beschreiben ist, Etikettinformationen aufweist.

11. Verfahren nach Anspruch 10, das ferner Folgendes umfasst:
Empfangen von Etikettinformationen, die von dem passiven RFID-Etikett, das zu lesen und zu beschreiben ist, gemeldet werden;
Beurteilen, ob die empfangenen Etikettinformationen eine voreingestellte Bedingung erfüllen; und
Verteilen neuer Etikettinformationen an das passive RFID-Etikett, das zu lesen und zu beschreiben ist, wenn die empfangenen Etikettinformationen die voreingestellte Bedingung nicht erfüllen.

12. Verfahren nach Anspruch 7, das nach dem Durchführen der Lese/Schreib-Operation auf dem passiven RFID-Etikett, das zu lesen und zu beschreiben ist, ferner Folgendes umfasst:
in dem RF-Lese/Schreibkopf Schließen eines optischen Senders, der dem passiven RFID-Etikett entspricht, das gegenwärtig gelesen und beschrieben wird; und
Durchführen von Lese/Schreib-Operationen auf anderen passiven RFID-Etiketten in den mehreren passiven RFID-Etiketten.

## Revendications

1. Tête de lecture/écriture radiofréquence, RF, comprenant : une pluralité d'émetteurs optiques (310), une puce (320) et une antenne RF (330), dans laquelle
l'antenne RF (330) est connectée à la puce (320) ;
la pluralité d'émetteurs optiques (310) sont connectés à la puce (320) ; et
la puce (320) est configurée i) pour commander un émetteur optique (310) correspondant à une étiquette d'identification radiofréquence, RFID, désignée dans la pluralité d'émetteurs optiques (310) pour émettre de la lumière de manière à fournir la puissance à l'étiquette RFID désignée lorsqu'une opération de lecture/écriture est effectuée sur l'étiquette RFID désignée dans une pluralité d'étiquettes RFID, et ii) pour commander l'antenne RF pour effectuer l'opération de lecture/écriture sur l'étiquette RFID désignée.

2. Tête de lecture/écriture RF selon la revendication 1, dans laquelle la tête de lecture/écriture RF comprend une antenne RF (330).

3. Tête de lecture/écriture RF selon la revendication 1, dans laquelle chacun des émetteurs optiques (310) est une diode électroluminescente, DEL.

4. Système d'identification d'étiquette RF, comprenant : une pluralité d'étiquettes RFID passives et une tête de lecture/écriture RF, dans lequel
chacune des étiquettes RFID passives comprend : un convertisseur optique-électrique, OEC, (410), une première antenne RF (420) et une première puce (430), dans lequel l'OEC (410) est connecté à la première puce et à la première antenne RF, et l'OEC est configuré pour convertir l'énergie optique transmise à partir de la tête de lecture/écriture RF en énergie électrique et fournir la puissance à la première puce et à la première antenne RF ; et la première puce est configurée pour mémoriser les informations d'étiquette et répondre à une opération de lecture/écriture de la tête de lecture/écriture RF ;
la tête de lecture/écriture RF comprend : une pluralité d'émetteurs optiques (310), une deuxième puce (320) et une deuxième antenne RF (330), dans lequel la deuxième antenne RF est connectée à la deuxième puce ; la pluralité d'émetteurs optiques (310) sont connectés à la deuxième puce ; et la deuxième puce est configurée i) pour commander un émetteur optique (310) correspondant à une étiquette RFID désignée dans la pluralité d'émetteurs optiques (310) pour émettre de la lumière de manière à fournir la puissance à l'étiquette RFID désignée lorsqu'une opération de lecture/écriture est effectuée sur l'étiquette RFID désignée dans la pluralité d'étiquettes RFID, et ii) pour commander la deuxième antenne RF pour effectuer l'opération de lecture/écriture sur l'étiquette RFID désignée.

5. Système d'identification d'étiquette RF selon la revendication 4, dans lequel la tête de lecture/écriture RF (2) comprend une deuxième antenne RF.

6. Système d'identification d'étiquette RF selon la revendication 4, dans lequel chacun des émetteurs optiques (310) est une DEL.

7. Procédé d'exécution d'une opération de lecture/écriture en utilisant le système d'identification d'étiquette RF selon la revendication 4, le procédé comprenant :
la détermination (S702) de l'étiquette RFID passive à lire et écrire ;
la commande (S704) de l'émetteur optique correspondant à l'étiquette RFID passive à lire et écrire dans la tête de lecture/écriture RF pour émettre de la lumière, de manière à fournir la puissance à l'étiquette RFID passive à lire et écrire ; et
l'exécution (S706) d'une opération de lecture/écriture sur l'étiquette RFID passive à lire et écrire.

8. Procédé selon la revendication 7, dans lequel l'exécution de l'opération de lecture/écriture sur l'étiquette RFID passive à lire et écrire, comprend :
l'envoi d'une instruction d'interrogation à l'étiquette RFID passive à lire et écrire, dans lequel l'instruction d'interrogation est configurée pour s'enquérir d'un état de l'étiquette RFID passive à lire et écrire ; et
la réception d'un premier état envoyé par l'étiquette RFID passive à lire et écrire.

9. Procédé selon la revendication 8, comprenant en outre :
le jugement du premier état ; et
la distribution d'informations d'étiquette à l'étiquette RFID passive à lire et écrire lorsque le premier état indique que l'étiquette RFID passive à lire et écrire est vide.

10. Procédé selon la revendication 8 ou 9, comprenant en outre :
le jugement du premier état ; et
la demande, à l'étiquette RFID passive à lire et écrire, de rapporter ses informations d'étiquette lorsque le premier état indique que l'étiquette RFID passive à lire et écrire contient des informations d'étiquette.

11. Procédé selon la revendication 10, comprenant en outre :
la réception des informations d'étiquette rapportées par l'étiquette RFID passive à lire et écrire ;
le jugement si les informations d'étiquette reçues satisfont à une condition prédéterminée ; et
la distribution de nouvelles informations d'étiquette à l'étiquette RFID passive à lire et écrire lorsque les informations d'étiquette reçues ne satisfont pas à la condition prédéterminée.

12. Procédé selon la revendication 7, qui, après l'exécution de l'opération de lecture/écriture sur l'étiquette RFID passive à lire et écrire, comprend en outre :
la fermeture d'un émetteur optique correspondant à l'étiquette RFID passive actuellement lue et écrite dans la tête de lecture/écriture RF ; et
l'exécution d'opérations de lecture et d'écriture sur d'autres étiquettes RFID passives dans la pluralité d'étiquettes RFID passives.
